# EUROPEAN PATENT SPECIFICATION

(11) **EP 1 515 082 B1**
(45) Date of publication and mention of the grant of the patent: **07.07.2010**
(21) Application number: 03425584.4
(22) Date of filing: 09.09.2003
(51) Int. Cl.: F17D 3/10

(54) **An arrangement for metering fluids, for instance for textile plants**
Eine Vorrichtung um Fluide zu messen, zum Beispiel für Textilfabriken
Un dipositif de mesure de fluides, par exemple pour des usines textiles

(43) Date of publication of application: 16.03.2005
(73) Proprietor: LAWER S.p.A., 13836 Cossato (IT)
(72) Inventor: De Bona, Paolo, I-13853 Lessona (Biella) (IT)
(74) Representative: Bosotti, Luciano

(56) References cited:
- US-A- 4 257 439
- US-A- 4 354 516
- US-A- 4 874 014
- US-A- 4 917 304
- US-A- 5 135 174
- US-A- 5 616 822

## Description

The present invention relates to systems for metering fluids, for example for metering dyeing products in the framework of the so-called "colour kitchens" of textile plants.

In said context of application, the solutions commonly used for obtaining systems which can meter precise amounts of products and send said precisely metered amounts of products to production systems via a network of pipes are basically two.

A first type of system is based essentially upon a technique which can be defined as gravimetric/weight-based. In the systems in question a tank is provided, which rests upon a weighing-machine that is disconnected from the delivery pipe by means of a system that can be uncoupled and has on its top part a series of valves (of a dual-stage on/off or modulating type) that meter the product.

This system guarantees excellent precision but, in addition to usually being rather costly and slow, imposes the need for mixing the product with the carrier liquid (typically water) necessary for washing the tank.

Another type of system is based upon volumetric techniques. The systems of this type are based upon the incompressibility of fluids and basically envisage the presence, within a circuit that is closed by various (inlet or outlet) valves and is always full of carrier liquid (water), of a flow meter (litre-counter), which can control and regulate entry of the product that is to be sent to the production machines.

This system is intrinsically less precise than the one referred to previously on account of the section of passage of the valves and the performance of the litre-counter device. It presents the major advantage of enabling a considerable operating speed, of using a reduced amount of carrier liquid for conveying the product. Furthermore, it is usually more reliable and economically advantageous than the gravimetric/weight-based system. A system for metering fluids is disclose in US 5616822.

In practical terms, the main limit of the volumetric system, in addition to its low precision, is represented by the impossibility of carrying out metering of small amounts. This normally entails the need for manual intervention for metering such amounts.

There thus emerges the need to provide metering systems that are able to combine the advantages of the two types of systems referred to above, without presenting the drawbacks thereof.

The purpose of the present invention is to meet the above requirement.

According to the present invention, this purpose is achieved thanks to a system having the features referred to in the ensuing claims.

Basically, the solution described herein envisages using, in the framework of a system that may fundamentally be likened to a metering system of a volumetric type, a syringe-type metering unit that enables a rather high metering precision to be obtained, virtually similar to the one that can be achieved with the gravimetric/weight-based system.

The combination of the advantages of the two systems means, above all, being able to carry out metering of large quantities in a fast and continuous way and metering of small quantities in a very precise way.

At least in some applications, the solution described herein presents further advantages linked to the possibility of operating with reduced quantities of water and using compressed air for washing.

The invention will now be described, purely by way of non-limiting example, with reference to the annexed drawings, in which:
- Figure 1 is a general illustration of a structure of a metering system for fluids, for example for textile plants; and
- Figures 2 to 9 illustrate successive operating steps of the system illustrated in Figure 1.

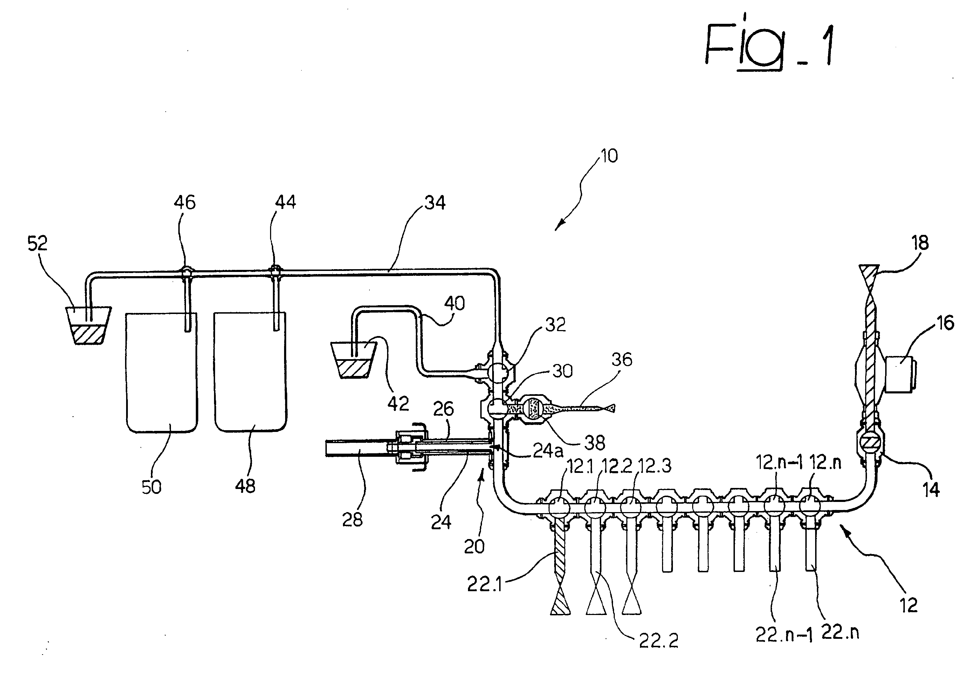

As has already been said in the introductory part of the present description, in a typical example of application, a system such as the one designated as a whole by 10 in Figure 1 is designed for being used in a textile system, for example for controlled metering of dyeing products that are to be sent on to treatment machines, such as dyeing machines and the like.

In general, the solution described herein can be used for metering all the liquid products useful for textile treatment processes, both dyeing and finishing. Normally, said products are divided into three types:
- chemical products, comprising all acidic and basic solutions;
- auxiliary products, comprising all solutions or emulsions, such as soaps or softening agents; and
- dyes, comprising all dyeing components.

The reference to this particular field of application is not, however, to be interpreted as in any way limiting the scope of the invention, which is altogether general. The invention can in fact find application in all those situations in which the aim is to obtain, in a fast, reliable and precise way, metering of predetermined amounts of a fluid product, guaranteeing their precision also in the case of small amounts.

To return to the specific example of application considered herein, it will be assumed that the system 10 is installed in a working environment in which there are available the sources of supply of energy and of servo means normally available in a textile system (for example, water, compressed air, etc.). The corresponding sources of supply are consequently not illustrated in the annexed drawings.

In the figures of the drawings, the reference number 12 designates as a whole a manifold comprising any number n of valves arranged in cascaded fashion 12.1, 12.2, 12.3, ..., 12.n of the type commonly referred to (perhaps in a not altogether appropriate way) as "three-way" valves.

These are, in other words, valves comprising three connection ports or openings.

Of these three ports, two constitute two openings (one for inlet and one for outlet) aligned with respect to one another in the general direction of flow of the fluids through the manifold in an arrangement in which:
- the valve set furthest upstream in the manifold (in the example illustrated herein, the valve designated by 12.n) has its inlet port connected, by means of a valve 14 for inlet of the water, to a litre-counter 16 connected to a water-inflow line 18, and its outlet port connected to the inlet port of the valve set immediately downstream of the manifold (i.e., the valve 12.n-1 in the example illustrated herein);
- the valve furthest downstream in the manifold (the one designated by 12.1) has its inlet port connected to the outlet port of the valve set immediately upstream (the valve designated by 12.2 in the example illustrated herein) and its outlet port connected, according to modalities illustrated in greater detail in what follows, to a syringe-type metering device 20; and
- all of the remaining valves in the manifold, i.e., the ones designated by the references 12.2 to 12.n-1 in the drawing illustrated, have their inlet port connected to the outlet port of the valve set immediately upstream and their outlet port connected to the inlet port of the valve situated immediately downstream.

Each of the valves 12.1 to 12.n then has a third port connected to a respective inlet pipe 22.1, 22.2, ..., 22.n for enabling supply of a fluid product to be metered.

Furthermore, each of the valves 12.1 to 12.n has a rotary distributor, which presents a general T-shaped configuration.

The aim of the above is to enable, for each of the valves 12.1 to 12.n, at least two operating positions, namely,
- a first operating position, in which the open/close element sets in communication, within each valve 12.1 to 12.n, the respective inlet and outlet ports; and
- a second operating position, in which the open/close element sets in communication the outlet port of the valves with the respective supply port 22.1 to 22.n.

The selective actuation of the open/close element, and hence switching between the two possible operating positions described previously, is obtained by means of known means (typically by means of a fluid actuator or solenoid) according to criteria in themselves known. Likewise known is the fact that the actuation mechanism, of whatever type it may be, can be interlocked to a programmable control unit (for example a PLC or a similar device), which is also of a known type and is designed to superintend operation of the open/close elements of all of the valves 12.1, ..., 12.n and of all the other switching elements (valves or the like) present in the system 10, as well as the valve 14, which is designed to inhibit selectively flow of the water from the litre-counter 16 to the manifold 12, and all the other valves and elements described in what follows.

Likewise evident to the person skilled in the branch is the fact that the manifold 12 may be replaced by a functionally equivalent device.

As already mentioned previously, the syringe-type metering element 20 is set downstream of the manifold 12 in the water flow line starting from the litre-counter 16.

Typically, the metering device 20 is made up of a cylindrical tubular body 24 having a proximal end 24a, which gives out into the flow pipe situated downstream of the manifold 12.

Free to move, in a water-tight way, inside the cylinder 24 is a piston 26, actuated by a positioning device 28 consisting typically of an electro-mechanical actuator, or positioner.

The choice of an electro-mechanical actuator (for example, of the screw type) enables a high degree of precision to be achieved in the positioning of the piston 26 inside the cylindrical body 24 of the metering device 20.

The references numbers 30 and 32 designate two further valves basically similar to the valves 12.1 to 12.n that make up the manifold 12. In practice, the two valves 30 and 32 are arranged in cascaded fashion along the water flow pipe, starting from the manifold 12 to a distribution line designated by 34.

In particular, the valve 30 enables the flow line that goes from the manifold 12 to the distribution line 34 to be set selectively in communication (according to the criteria described in greater detail in what follows) with a compressed-air supply line 36, in which there is set a shut-off valve 38 basically similar to the shut-off valve 14 situated downstream of the litre-counter 16.

The valve 32 enables, instead, the flow line downstream of the manifold 12 to be set in communication with a local discharge pipe 40, which comes under a container/reservoir 42 for collection and disposal.

Set in the distribution line 34 are one or more valves 44, 46, which enable the fluid that is flowing in the distribution line 34 to be selectively deviated to one or more containers 48, 50, which have the function of user container, i.e., of a container in which the metered fluid is collected.

Finally, the reference number 52 designates a further pipe/container, which is designed to function for draining off the distribution line 34 according to the modalities described in greater detail in what follows.

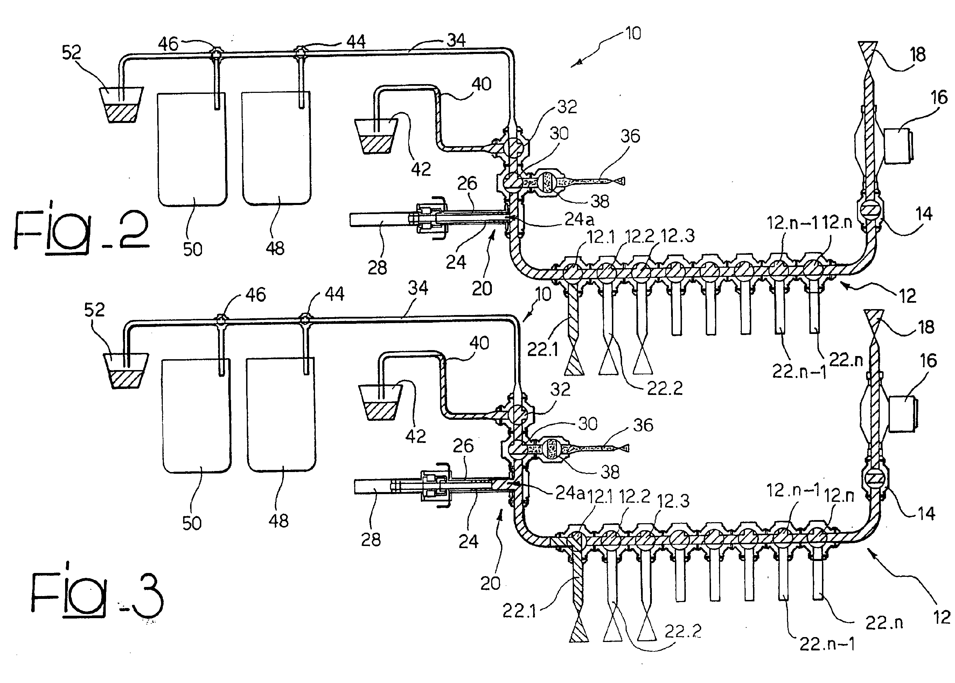

A typical sequence of use of the system 10 described above will now be illustrated with reference to the sequence of Figures 2 to 9.

As already mentioned, it will be assumed that all of the controllable elements present in the system 10 (essentially all of the valves described, as well as the positioner 28 of the syringe-type metering device 20) come under the operation of a control unit consisting typically of a programmable processing unit. The programming of said unit according to the operating sequence described in what follows, constitutes a design task within the reach of a person skilled in the programming of said units, which renders any detailed description thereof superfluous.

Figure 2 illustrates the typical condition of start of the metering cycle.

Between the operating steps illustrated in Figures 1 and 2, there is preferentially performed an intermediate step, which is advantageous for achieving proper metering, i.e., filling of the circuit comprised between the valves 14 and 30 without the presence of any air bubbles. In order to achieve this result, before proceeding to metering (or suction) in the terms described in greater detail in what follows, the manifold 12 is set in communication with the discharge 42, causing an amount of water equal to or larger than the capacity of the manifold 12 to enter the circuit by opening the valve 14 and measuring the said amount with the litre-counter 16.

In the above condition, the water-supply line (in the remainder of the present description we shall continue to assume that the solution-carrier liquid is water, but this choice is not in any way binding for the purposes of the invention) is completely full both in the stretch that extends through the manifold 12 and in the stretch into which the proximal opening 24a of the syringe-type metering device 20 gives out.

It will moreover be assumed that both of the shut-off valves 14 and 38 are in a closed position and that both of the open/close elements of the valves 30 and 32 are full of fluid, the same applying also to the local discharge line 40.

It will moreover be appreciated that for metering it is sufficient that the closed valves are only the valves 14, 30 and those of the manifold 22.1-22.n. Not necessarily do the other valves external to the manifold have to be full of fluid and in a given position.

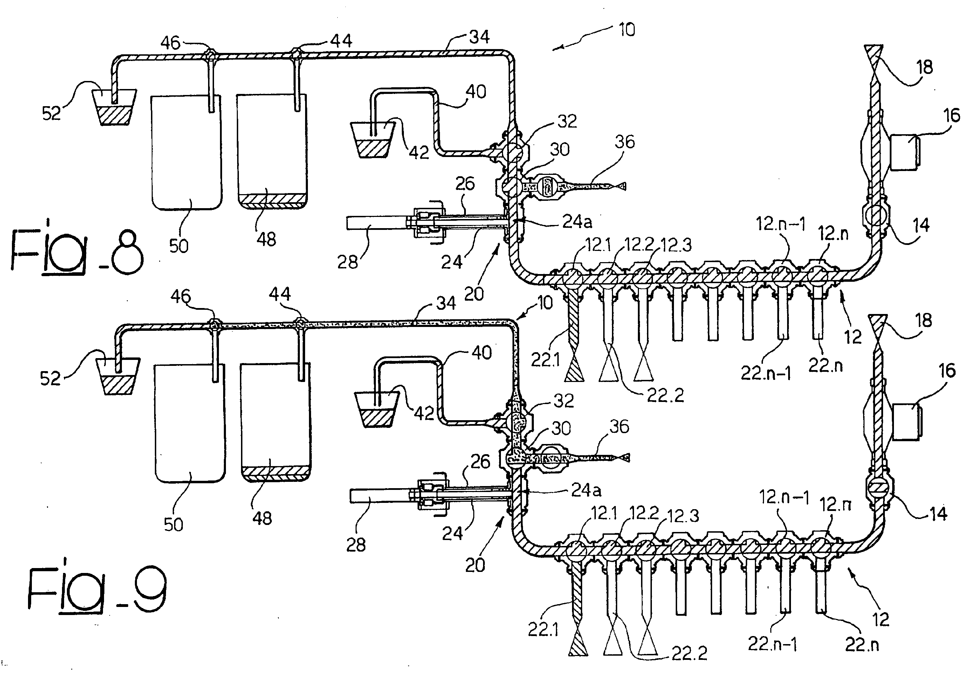

Rather, whilst an operation of suction/metering of a product is being performed, it is at the same time possible to complete a previous metering operation by introducing air from the line 36 to the destinations 44, 46 or 52, as described in greater detail in what follows with reference to Figure 9.

Figure 3 refers to an operation of metering the fluid coming, for example, from the supply line 22.1 associated to the first valve 12.1 of the manifold 12. It will be appreciated that the same modalities of operation (and hence of metering) are applicable to any one of the fluids that can be supplied by means of the other lines 22.2 to 22.n.

For the above purpose, the system 10 maintains the same configuration as the one described with reference to Figure 2, with the valve 30 closed, with just two differences:
- the valve 12.1 is brought into the operating position that sets the supply line 22.1 in communication with the respective outlet port; and
- the positioning device 28 of the syringe-type metering device 20 is activated in such to way as to recall, within the cylinder 24, an exactly determined amount of fluid.

The fluid recalled inside the metering device 20 is usually made up of the carrier liquid (hence, water). However, on account of the incompressibility of fluids, the quantity of carrier fluid recalled into the metering device 20 starting from its proximal end 24a corresponds exactly to the quantity of fluid to be metered that is taken from the line 22.1.

It will moreover be appreciated that what has been said previously applies identically whatever the valve 12.1 to 12.n of the manifold 12 that is brought into the metering position.

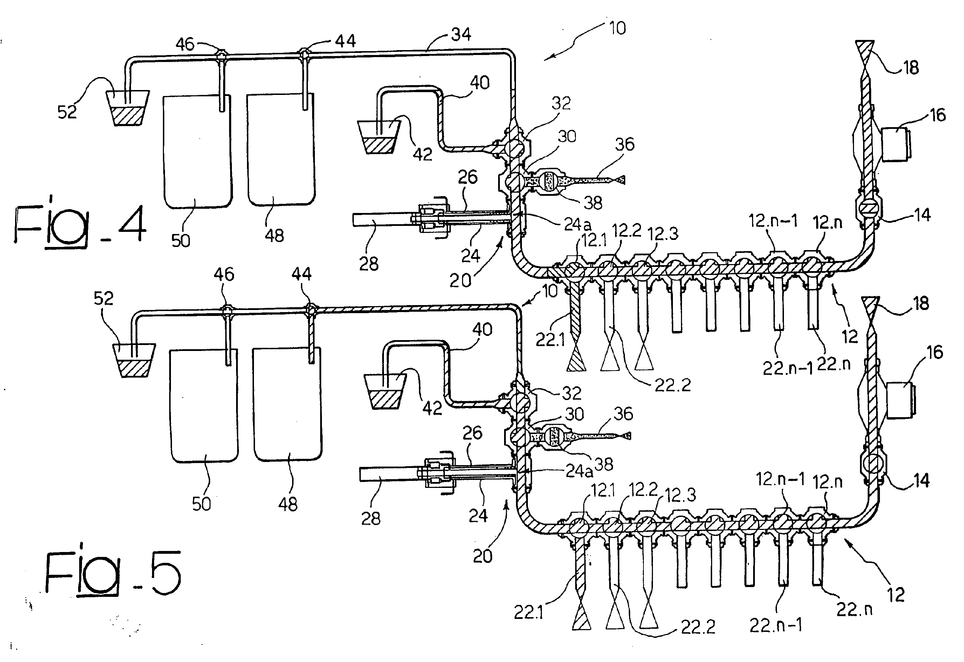

The next operating step represented in Figure 4 envisages that the valve 30 will be brought into the position in which the valve itself sets its inlet port in communication with its outlet port. In the meantime, the valve 12.1 is brought back into the position in which the fluid continuity of the manifold 12 is reconstituted by inhibiting communication with the supply line 22.1. Once said positioning of the valves has been achieved, the metering device 20 is again actuated so as to bring the piston 26 back into the position of end-of-travel, and hence expelling once again, starting from its proximal end 24a, the amount of fluid (exactly metered) previously recalled into the cylinder 24 during the step illustrated in Figure 3.

The net effect of said operation is to bring about a rise of the fluid inside the first stretch of the distribution line 34 beyond the valve 32.

Usually, the step of expulsion of the fluid from the metering device 20 also envisages rotation of the valve 44 or, alternatively, of an end-of-line valve (not illustrated in the drawings).

A number of metering operations of the type described above may be concatenated, before sending the metered product to the user points, for metering amounts of product greater than the capacity of the syringe-type metering device 20 or for metering other products that are compatible with one another.

It will moreover be appreciated that the valve 30 has the function of closing the manifold 12 so that the syringe-type metering device 20, as it moves back, will take product only from the respective open valve. The function of causing the distribution line to communicate with the supply of air is hence secondary in so far as the system can deliver even only with water taken from the valve 14.

In the next operating step (illustrated in Figure 5), the shut-off valve 14 is brought into the opening position, thus causing, as a result of the inflow of water through the line 18, the product that has previously been taken from the line 22.1 through the valve 12.1 to rise inside the distribution line 34 beyond the valve 30 (which may be referred to as "air valve" on account of its connection to the compressed-air supply line designated by 36).

As mentioned above, the circuit may be cleared either with water or with compressed air. Also in the case where compressed air is used, there is preferably inserted a water buffer, determined by the operating cycle, between the product and the air, with the function of flushing the pipe.

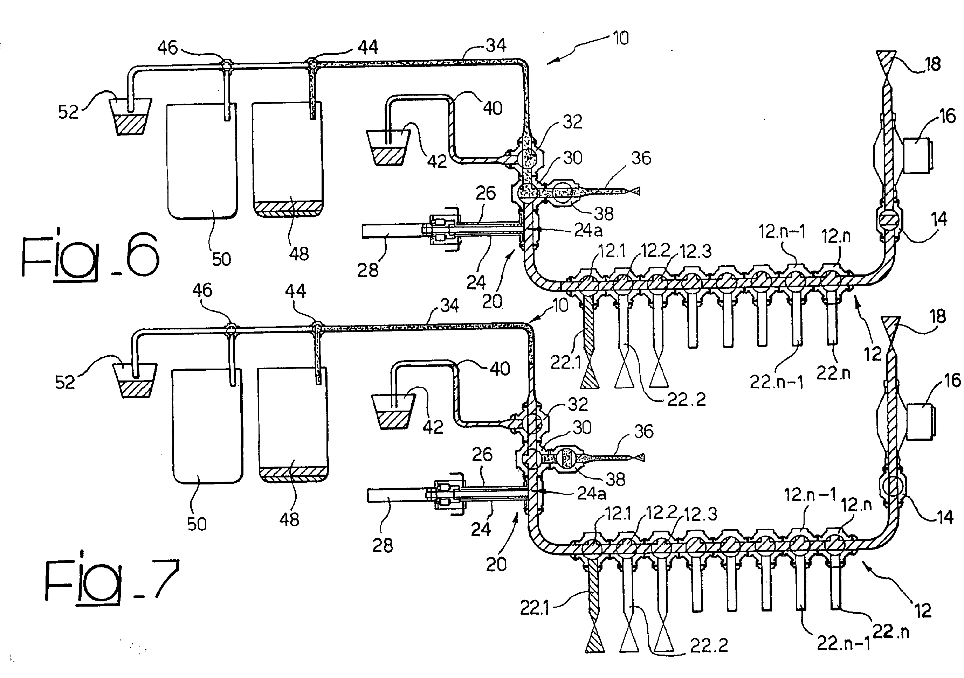

In yet a further operating step (illustrated in Figure 6), the air valve 30 is brought into the position where it is able to set the compressed-air supply line 36 in communication, via the shut-off valve 38 brought into the opening position, with the distribution line 34.

In this way the product previously metered may be pushed along the distribution line and caused to flow into the container 48 through the valve 44.

Figure 7 illustrates a possible subsequent operating step, in which, once the valve 30 has been brought back into the operating position that establishes fluid connection between the manifold 12 and the distribution plug 34, it is possible to proceed to flushing of the line in the machine with a water buffer pushed by the air.

In a strict sense, Figure 7 represents a step of transition between emptying of the line and subsequent washing of the line being discharged 52 of Figure 8. Should more washing water be required, it is possible to increase the buffer or else use just water and not compressed air.

The step represented in Figure 8 corresponds to the operating step in which, by means of water taken from the line 18, it is possible to proceed to a complete clearing of the entire line involved in the metering phenomenon (manifold 12, proximal opening 24a of the metering device 20, valves 30 and 32, distribution line 34), causing the corresponding fluid to be discharged to the end-of-line pipe 52 through the valves 44 and 46, maintained in the condition that establishes fluid continuity between the distribution line 34 and the end of the line 52.

By bringing the valve 30 back once again into the position of communication with the compressed-air supply line 36, with the shut-off valve 38 brought into the opening position, it is moreover possible to proceed to emptying the discharge line using compressed air according to the modalities illustrated in Figure 9.

The barrels 48 and 50 represent schematically the various items of user apparatus. Usually, these are connected up to a computer, which enables them to transmit the metering requirements of the system metering device that carries out metering and to deliver the products in the quantities required.

It is evident that the user points may be present in any number (from one to - theoretically - an infinite number). The corresponding circuit diagram shown herein is a representation that is deliberately simplified for reasons of clarity of illustration. The corresponding system, generically referred to as single-line system, has been used for many years by the present applicant precisely on account of its simplicity.

Basically, the above system envisages creating, starting from just one line, with three-way valves, such as the valve 44 or the valve 46, sub-branches in which it is possible to distribute other user valves so as to optimize the path inside the production departments. At the end of each branch created (e.g., downstream of the valve 46 shown in the diagram), there is usually installed a two-way drain-off valve (not illustrated in the drawings).

At this point, the metering cycle just described may be repeated starting from the operating position illustrated in Figure 2, along with the possibility of a free choice of the line 22.1 to 22.n from which the fluid to be metered is to be taken.

As already mentioned previously, the solution described herein enables, whilst an operation of suction/metering of a product is being performed, simultaneous completion of a previous metering operation by introducing air from the line 36 to the destinations 44, 46 or 52.

Persons skilled in the sector will appreciate the fact that the valves 30 and 32 in themselves have secondary functions with respect to the syringe-type metering mechanism described herein.

In fact, in the different steps, the valves 30 and 32 set in communication the inlet for the air (valve 30) and the washing discharge (valve 32). Their main purpose is thus to optimize other functions of the system, for example to reduce the amount of water that conveys the product or to improve washing of the metering manifold.

In principle, since there is available only one user point (valve 44 or valve 46) the system described herein is able to function also by replacing the two three-way valves with just one two-way valve so as to close the circuit downstream of metering in the step of suction of the syringe-type metering device.

The presence of the valve 32 may play a role in the metering process in the case of complex configurations of the circuit, when the valves 44 and 46 representing the points using the metered amounts are numerous and located at some distance from one another. The valve 32, which is used in the step of pushing the fluid to the discharge 42, may moreover have the function of optimizing efficiency of the syringe, maintaining a constant pressure head.

It is moreover evident that, without prejudice the principle of the invention, the details of production and the embodiments may vary widely with respect tc what is described and illustrated herein, without thereby departing from the scope of the present invention, as defined by the annexed claims.

## Claims

1. A system for selective metering of fluids, **characterized in that** it comprises:
- a manifold (12), comprising at least one supply line and at least one valve (12.1, ..., 12.n) which can selectively provide connection to a respective supply line (22.1, ..., 22.n) for a fluid to be metered; and
- a syringe-type metering device (20) connected to said manifold (12) so that, with said at least one valve (12.1, ..., 12.n) that sets said manifold (12) in connection with said at least one respective metering line (22.1, ..., 22.n), said syringe-type metering element is able to recall into said manifold (12) from a supply line a quantity of said fluid to be metered, identified by the metering position reached by said syringe-type metering element (20) when recalling carrier fluid from the manifold.

2. The system according to Claim 1, **characterized in that** said manifold (12) and said syringe-type metering element (20) constitute successive stretches of a flow line (14, 16, 12, 20) for a carrier fluid for conveying said fluid to be metered.

3. The system according to Claim 1 or Claim 2, **characterized in that** said manifold (12) is defined by a battery of valves (12.1, ..., 12.n), each of which is able to set said manifold (12) selectively in communication with a respective supply line for supplying said fluid to be metered (22.1, ..., 22.n).

4. The system according to any one of the preceding claims, **characterized in that** said syringe-type metering device (20) is arranged fluid-dynamically downstream of said manifold (12).

5. The system according to any one of the preceding claims, **characterized in that** it comprises, fluid-dynamically downstream of said manifold (12) and of said syringe-type metering element (12), an aeriform-supply line that can be selectively activated (30, 32) for pumping away from said syringe-type metering element (20) and from said manifold (12) a mass of fluid comprising said metered fluid taken from said at least one supply line for supplying fluid to be metered (22.1, ..., 22.n) as a result of activation of said syringe-type metering element (20).

6. The system according to Claim 5, **characterized in that** said pressurized aeriform-supply line has associated to it at least one respective shut-off valve (34).

7. The system according to Claim 5 or Claim 6, **characterized in that** it comprises a further control valve (30) associated to the point of connection of said aeriform-supply line with a distribution line (34), set fluid-dynamically downstream of said syringe-type metering element (20) and of said manifold (12); and a carrier-fluid source (14) that can be selectively activated to cause the carrier liquid to flow through said manifold (12) so as to draw said fluid to be metered, which is recalled into said manifold (12) as a result of the actuation of said syringe-type metering element (20), into a position located fluid-dynamically downstream of said point of introduction of said aeriform supply line (30).

8. The system according to any one of the preceding claims, **characterized in that** it comprises a drain-off line (32) for selectively discharging the fluid contained in said manifold (12).

## Patentansprüche

1. Ein System zur selektiven Dosierung von Flüssigkeiten, **dadurch gekennzeichnet, dass** es umfasst:
- eine Sammelleitung (12), die wenigstens eine Versorgungsleitung und wenigstens ein Ventil (12.1, ..., 12.n) aufweist, das wahlweise den Zugang zu einer entsprechenden Versorgungsleitung (22.1, ..., 22.n) für eine dosierende Flüssigkeit ermöglichen kann; und
- eine spritzenartige Dosiereinrichtung (20), die mit der Sammelleitung (12) verbunden ist, so dass das spritzenartige Dosierelement mit dem wenigstens einen Ventil (12.1, ..., 12.n), welches die Sammelleitung (12) mit der wenigstens einen entsprechenden Dosierleitung (22.1, ..., 22.n) verbindet, geeignet ist, eine Menge der zu dosierenden Flüssigkeit aus einer Versorgungsleitung in die Sammelleitung (12) zurückzuholen, welche durch die Dosierposition identifiziert wird, die durch das spritzenartige Dosierelement (20) während des Zurückholens der Trägerflüssigkeit aus der Sammelleitung eingenommen wird.

2. Das System nach Anspruch 1, **dadurch gekennzeichnet, dass** die Sammelleitung (12) und das spritzenartige Dosierelement (20) aufeinander folgende Strecken einer Strömungsleitung (14, 16, 12, 20) für ein der Trägerfluid bilden, um die zu dosierende Flüssigkeit zu fördern.

3. Das System nach Anspruch 1 oder 2, **dadurch gekennzeichnet, dass** die Sammelleitung (12) durch eine Anordnung von Ventilen (12.1, ..., 12.n) begrenzt ist, wobei jedes geeignet ist, die Sammelleitung (12) wahlweise mit einer entsprechenden Versorgungsleitung (22.1, ..., 22.n) zum Zuführen der zu dosierenden Flüssigkeit zu verbinden.

4. Das System nach einem der vorhergehenden Ansprüche, **dadurch gekennzeichnet, dass** die spritzenartige Dosiereinrichtung (20) der Sammelleitung (12) in Strömungsrichtung nachgeschaltet ist.

5. Das System nach einem der vorhergehenden Ansprüche, **dadurch gekennzeichnet, dass** es der Sammelleitung (12) und dem spritzenartigen Dosierelement (12) in Strömungsrichtung nachgeordnet eine Gas-Versorgungsleitung umfasst, die wahlweise aktiviert werden kann (30, 32), um eine Menge von Flüssigkeit aus dem spritzenartigen Dosierelement (20) und aus der Sammelleitung (12) abzupumpen, die aus der zu dosierenden Flüssigkeit besteht, die aus wenigstens einer der Versorgungsleitungen zum Zuführen der zu dosierenden Flüssigkeit (22.1, ..., 22.n) als Resultat der Aktivierung des spritzenartigen Dosierelements (20) entnommen wurde.

6. Das System nach Anspruch 5, **dadurch gekennzeichnet, dass** der unter Druck stehenden Versorgungsleitung zumindest ein jeweiliges Absperrventil (34) zugeordnet ist.

7. Das System nach Anspruch 5 oder 6, **dadurch gekennzeichnet, dass** es ein weiteres Steuerventil (30) umfasst, das mit der Anschlussstelle der Gas-Versorgungsleitung an einer Verteilerleitung (34) verbunden, und dem spritzenartigen Dosierelement (20) und der Sammelleitung (12) in Strömungsrichtung nachgeordnet ist; und dass es eine Quelle für die Trägerflüssigkeit (14) umfasst, die wahlweise aktiviert werden kann, um die Trägerflüssigkeit durch die Sammelleitung (12) strömen zu lassen, so dass die zu dosierende Flüssigkeit, die in die Sammelleitung (12) aufgrund der Betätigung des spritzenartigen Dosierelements (20) gezogen wurde, in eine Position zu ziehen, die strömungsdynamisch dem Zuführpunkt der Gas-Versorgungsleitung (30) nachgeordnet ist.

8. Das System nach einem der vorhergehenden Ansprüche, **dadurch gekennzeichnet, dass** es eine Auslassleitung (32) umfasst, um wahlweise die Flüssigkeit aus der Sammelleitung (12) abzulassen.

## Revendications

1. Système pour le dosage sélectif de fluides, **caractérisé en ce qu'**il comprend :
un collecteur (12) comprenant au moins une conduite d'alimentation et au moins une valve (12.1, ..., 12.n), qui peut fournir sélectivement le raccordement à une conduite d'alimentation (22.1, ..., 22.n) respective pour un fluide à doser ; et
un dispositif de dosage de type seringue (20) raccordé audit collecteur (12) de sorte que, avec ladite au moins une valve (12.1, ..., 12.n) qui place ledit collecteur (12) en connexion avec ladite au moins une conduite de dosage (22.1, ..., 22.n), ledit élément de dosage de type seringue peut rappeler dans ledit collecteur (12) à partir d'une conduite d'alimentation, une quantité dudit fluide à doser, identifiée par la position de dosage atteinte par ledit élément de dosage de type seringue (20), lors du rappel du fluide porteur du collecteur.

2. Système selon la revendication 1, **caractérisé en ce que** ledit collecteur (12) et ledit élément de dosage de type seringue (20) constituent des allongements successifs d'une conduite d'écoulement (14, 16, 12, 20) pour un fluide porteur afin de transporter ledit fluide à doser.

3. Système selon la revendication 1 ou la revendication 2, **caractérisé en ce que** ledit collecteur (12) est défini par une batterie de valves (12.1, ..., 12.n) dont chacune peut placer ledit collecteur (12) sélectivement en communication avec une conduite d'alimentation respective pour alimenter ledit fluide à doser (22,1, ... , 22.n)

4. Système selon l'une quelconque des revendications précédentes, **caractérisé en ce que** le dispositif de dosage de type seringue (20) est agencé de manière dynamiquement fluide en aval dudit collecteur (12).

5. Système selon l'une quelconque des revendications précédentes, **caractérisé en ce qu'**il comprend, de manière dynamiquement fluide en aval dudit collecteur (12) et dudit élément de dosage de type seringue (12), une conduite d'alimentation aériforme qui peut être sélectivement activée (30, 32) pour pomper dudit élément de dosage de type seringue (20) et dudit collecteur (12), une masse de fluide comprenant ledit fluide dosé pris dans ladite au moins une conduite d'alimentation pour alimenter le fluide à doser (22.1, ... , 22.n) suite à l'activation dudit élément de dosage de type seringue (20).

6. Système selon la revendication 5, **caractérisé en ce que** la conduite d'alimentation aériforme sous pression a, associée à celle-ci, au moins une valve d'arrêt (34) respective.

7. Système selon la revendication 5 ou la revendication 6, **caractérisé en ce qu'**il comprend une autre valve de régulation (30) associée au point de raccordement de ladite conduite d'alimentation aériforme avec une conduite de distribution (34) placée de manière dynamiquement fluide en aval dudit élément de dosage de type seringue (20) et dudit collecteur (12) ; et une source de fluide porteur (14) qui peut être sélectivement activée pour amener le fluide porteur à s'écouler à travers ledit collecteur (12) afin d'aspirer ledit fluide à doser, qui est rappelé dans ledit collecteur (12) suite à l'activation dudit élément de dosage de type seringue (20), dans une position située de manière dynamiquement fluide en aval dudit point d'introduction de ladite conduite d'alimentation aériforme (30).

8. Système selon l'une quelconque des revendications précédentes, **caractérisé en ce qu'**il comprend une conduite d'évacuation (32) pour décharger sélectivement le fluide contenu dans ledit collecteur (12).
